Europäisches Patentamt

European Patent Office

Office européen des brevets

(19)

(11) Publication number: **0 007 112 B1**

(12) **EUROPEAN PATENT SPECIFICATION**

(45) Date of publication of patent specification: **27.01.82**

(51) Int. Cl.³: **A 01 N 25/04**

(21) Application number: **79102486.2**

(22) Date of filing: **16.07.79**

(54) Flowable defoliant and desiccant composition and its use.

(30) Priority: **17.07.78 US 925194**

(43) Date of publication of application:
**23.01.80 Bulletin 80/2**

(45) Publication of the grant of the European patent:
**27.01.82 Bulletin 82/4**

(84) Designated Contracting States:
**BE CH DE FR GB IT NL SE**

(56) References cited:
**CH - A - 262 791
DE - A - 579 598
DE - A - 698 474
FR - A - 881 457
FR - A - 1 366 891
FR - A - 2 206 049
FR - A - 2 269 367
GB - A - 595 309
US - A - 2 290 235**

(73) Proprietor: **J.T. Baker Chemical Co.
222 Red School Lane
Phillipsburg, New Jersey 08865 (US)**

(72) Inventor: **Kaufman, Harold A.
142 Fountain Avenue
Piscataway, New Jersey (US)**

(74) Representative: **Vossius . Vossius . Tauchner .
Heunemann . Rauh
Siebertstrasse 4 P.O. Box 86 07 67
D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Flowable defoliant and desiccant composition and its use

## Field of the invention

This invention relates to aluminum hydroxide flowable gel defoliant and desiccant compositions of ammonium thiocyanate and to the preparation thereof and their use.

## Background of the Invention

Commercially available herbicide formulations are generally in the form of wettable powders, dusts or granules. However, such formulations are not always desirable as they present problems in handling of the formulations and are particularly irritating to the grower-user. Moreover, many herbicide active ingredients are difficult to suspend and thus do not lead to easily produced formulations of the type mentioned. In addition, in the past certain active ingredients that are insoluble organic acids were formed as dialkylamine salts in order to obtain the necessary suspension of the product. However, such dialkylamine salts have the potential of forming highly undesirable nitroso amine derivatives in the environment.

It is, therefore, highly desirable to obtain herbicide formulations which avoid one or more of these disadvantages of prior art formulations. Moreover, it would also be advantageous to provide such new and improved herbicide and pesticide formulations which, in addition to avoiding one or more of the prior art problems, also leads to formulations that may possess one or more additional advantages over the prior art formulations.

## Summary of the invention

It has now been discovered that new and improved flowable defoliant and desiccant formulations may be formed by combining ammonium thiocyanate of suitable particle size with aluminum hydroxide gels. It has been found that such aluminum hydroxide gel defoliant and desiccant formulations in addition to eliminating one or more of the disadvantages of prior art formulations also provide formulations that may possess one or more of the following advantages. Formulations of this invention when compared to prior art formulations have been shown to possess superior suspending properties, improved crop tolerance, better handling characteristics than dry dusty wettable powders, an environmental safety advantage over emulsifiable concentrates containing volatile organic carriers and enhanced desiccation-defoliation action thereby reducing the amount of active ingredient required as a harvest aid.

## Details of the invention

The formulations of the invention are generally prepared by incorporating the appropriate quantity of the active ingredient along with any desired freeze thaw agent, water, and suitable wetting, dispersing and antifoam agents into any suitable mill, or homogenizer such as, for example, an attritor or ball mill, where the ingredients are intimately and homogeneously mixed and the particle size of the active ingredient is reduced to the desirable particle size range, generally from about 2 to about 5 microns average particle diameter. The mixture, of desired particle size, is then removed from the mill and aluminum hydroxide gel combined therewith with mixing to yield a generally fluid, homogeneous, very slow settling suspension. Alternatively, the aluminum hydroxide gel can, if desired, be added directly to the mill for a brief period after the correct toxicant particle size is reached.

Generally aluminum hydroxide gel, containing about 2 to 20%, preferably 10 to 15% by weight aluminum hydroxide, is employed as the suspending agent at a concentration range of about 5 to 30%, preferably 15 to 25% by weight. The aluminum hydroxide gel can be used as the sole suspending agent or in combination with other suspending agents, for example, methylcellulose, hydroxy propylmethylcellulose, magnesium hydroxide gel, bentonite, Veegum, attapulgite clays, hydroxypropyl guar. The aluminum hydroxide concentration in compositions of this invention is generally in the range of 0.10 to 6.0% by weight aluminum hydroxide (that, is 0.065 to 3.9% by weight $Al_2O_3$).

Any suitable freeze thaw agent can be employed in the flowable compositions of this invention and is generally present in an amount of from 1 to 10% by weight. Among such suitable freeze thaw agents there can be mentioned, for example, urea, polyhydric alcohols such as glycerol, sorbitol, mannitol, ethylene glycol, propylene glycol, polyethylene glycol, glucose, sucrose as well as water soluble non-toxic polymeric agents such as dextran, polyvinylpyrrolidone. Preferred for use in the compositions of this invention is propylene glycol.

Any suitable wetting and dispersing agents may be used in the flowable compositions of this invention and are generally employed in an amount of from 1 to 6% by weight. Exemplary of suitable wetting and dispersing agents there can be mentioned, for example, non-ionic aromatic polyethylene glycol ethers, such as Antarox® A-400, alkyl aryl polyether alcohol type emulsifiers such as Triton® X-100, sulfonated purified lignins such as Reax® 45A and Reax® 45L and a fine mesh, high viscosity, hydroxypropyl guar such as Jaguar® HP-8.

Suitable antifoam agents when employed are used in an amount of from about 0.1 to 0.5% by weight. Any suitable antifoam agent can be employed, for example a 50% by weight solution of 2,4,7,9-tetramethyl-5-decyn-4,7-diol known as Surfynol® 104-E.

It will be appreciated that the foregoing examples are merely exemplary of the many ammonium thiocyanate compositions that may be formulated as the compositions of this invention. In the formulations of this invention the ammonium thiocyanate will generally be present in an amount of from 0.06 to 0.72 g and preferably 0.36 to 0.6 g of ammonium thiocyanate per ml of formulation.

The compositions can also comprise such additional substances as other herbicides, stabilizers, spreaders, deactivators, adhesives, stickers, fertilizers, activators and synergists. That is, the compositions of the present invention are also useful when herbicides, and/or other defoliants, desiccants, and/or growth regulants are included in the compositions of the invention heretofore described. These other materials can comprise from about 5% to 95% of the active ingredients in the inventive compositions. Use of combinations of these herbicides, and/or other defoliants, and/or other dessicants with the ingredients of the present invention provide defoliant and desiccant compositions which are also effective in controlling weeds. The other herbicides, defoliants, desiccants and plant growth regulants which can be used in the compositions of this invention include chlorophenoxy herbicides such as 2,4,5-T,MCPA,MCPB, 4(2,4-DB), 2,4-DEB, 4-CPB, 4-CPA, 4-CPP, 2,4,5-TB, 2,4,5-TES, 3,4-DA, silvex; carbamate herbicides such as IPC, CIPC, swep, barban, BCPC, CEPC, CPPC; thiocarbamate and dithiocarbamate herbicides such as CDEC, methan sodium, EPTC, diallate, PEBC, perbulate, vernolate; substituted urea herbicides such as norea, siduron, dichloral urea, chloroxuron, cycluron, fenuron, monuron, monuron TCA, diuron, linuron, monolinuron, neburon, buturon, trimeturon; symmetrical triazine herbicides such as simazine, chlorazine, atratone, desmetryne, norazine, ipazine, prometryn, trietazine, simetone, prometone, propazine, ametryne; chloroacetamide herbicides such as alpha - chloro - N, N-dimethylacetamide, CDEA, CDAA, alpha - chloro - N - isopropylacetamide, 2 - chloro - N - isopropylacetanilide, 4 - (chloroacetyl)morpholine, 1-(chloroacetyl) piperidine; chlorinated aliphatic acid herbicides such as TCA, dalapon, 2,3-dichloropropionic acid, 2,2,3-TPA; chlorinated benzoic acid and phenylacetic acid herbicides such as 2,3,6-TBA, 2,3,5,6-TBA, tricamba, amiben, fenac, PBA, 2 - methoxy - 3,6 - dichlorophenylacetic acid, 3 - methoxy - 2,6 - dichlorophenylacetic acid, 2 - methoxy - 3,5,6 - trichlorophenylacetic acid, 2,4 - dichloro - 3 - nitrobenzoic acid, sodium 5 - [2 - chloro - 4 - (trifluoromethyl) - phenoxy] - 2 - nitrobenzoate; and such compounds as aminotriazole, maleic hydrazide, phenyl mercuric acetate, endothal, biuret, technical chlordane, dimethyl 2,3,5,6-tetrachloroterephthalate, diquat, erbon, DNC, DNBP, dichlobenil, DPA diphenamid, dipropalin, trifluralin, solan, dicryl, merphos, DMPA, DSMA, MSMA, potassium azide, acrolein, benefin, bensulide AMS, bromacil, 2(3,4 - dichlorophenyl) - 4 - methyl - 1,2,4 - oxabdiazolidine - 3,5 - dione, bromoxynil, cacodylic acid, CMA, CPMF, cypromid, DCB, DCPA, dichlone, diphenatril, DMTT, DNAP, EBEP, EXD, HCA, ioxynil, IPX, isocil, potassium cyanate, MAA, MAMA, MCPES, MCPP, MH, molinate, NPA, OCH, paraquat, PCP, picloram, DPA, PCA, pyrichlor, sesone, terbacil, terbutol, TCBA, brominil CP-50144, H-176-1, H-732, M-2901, planavin, sodium tetraborate calcium cyanamide, DEF, ethyl xanthogen disulfide, sindone, sindone B and propanil.

Such herbicides can also be used in the defoliant and desiccant compositions of this invention in the form of their salts, esters, amides and other derivatives whenever applicable to the particular parent compounds.

When herbicides in the inventive compositions are used in their free acid form they bind to the alumina suspending agents. These compositions then control the release of active ingredients. Additionally, such a flowable system provides a unique liquid carrier and suspension system which obviates the need for the preparation of dialkylamine salts which have the potential of forming undesirable nitroso amine derivatives. Moreover, when formulated as a flowable composition of this invention the active ingredient in addition to ammonium thiocyanate will generally exhibit improved herbicidal performance over use of the free acid according to prior art compositions.

As examples of ammonium thiocyanate defoliant and desiccant formulations according to this invention reference may be made to the following illustrative examples.

Example 1

An ammonium thiocyanate-aluminum hydroxide composition was prepared by mixing ammonium thiocyanate dissolved in water with aluminum hydroxide gel to give a final composition containing by weight, 45% ammonium thiocyanate, 18% aluminum hydroxide gel and 37% water. This composition can be made to a thicker consistency and improved suspension, if desired, by the incorporation of appropriate thickening agents such as methylcellulose, hydroxypropyl methylcellulose or various clays such as bentonite or attapulgite or the hydroxypropyl guar Jaguar® HP-8 (Trademark by Stein/ Hall & Co., New York, U.S.A.).

An example of an especially preferred formulation of this invention is set forth in the following example.

Example 2

Ammonium thiocyanate formulation

| Component | Weight % |
| --- | --- |
| Ammonium Thiocyanate | 45 |
| Aluminum hydroxide gel (10% Al$_2$O$_3$ assay) | 18 |
| Jaguar® HP-8 | 0.5 |
| Water | 36.5 |
| | 100.0 |

In a defoliation study of ammonium thiocyanate for cotton, cotton plants were sprayed in a precision endless belt sprayer at dosages indicated in 449.43 l of water per ha. The plants were removed to the greenhouse and scored for defoliation (true leaf abscission and dropping) and desiccation (leaf dehydration and sticking) at 7 and 14 days following treatment. A final scoring for regrowth was made on the 25th day. Scoring is in terms of percent of defoliation, desiccation, total damage and regrowth.

The ammonium thiocyanate formulation of Example 2 gave superior defoliation and desiccant activity compared to technical ammonium thiocyanate in that it gave 100% total activity at a dosage of 560 kg/ha with only 10% regrowth whereas the technical ammonium thiocyanate at 560 kg/ha gave only 30% total activity with 83% regrowth.

## Claims

1. A flowable defoliant and desiccant composition comprising ammonium thiocyanate and from 5 to 30% by weight aluminum hydroxide gel.

2. The composition of claim 1 wherein there is also present a wetting and a dispersing agent.

3. The composition of claim 1 wherein there is present an antifoam agent.

4. The composition of claim 2 wherein there is also present a freeze thaw agent in an amount of from 1 to 10% by weight and is selected from urea, glycerol, sorbitol, mannitol, ethylene glycol, propylene glycol, polyethylene glycol, glucose, sucrose, dextran and polyvinylpyrrolidone.

5. The composition of claim 2 wherein the wetting and dispersing agent is present in an amount of from 1 to 6% by weight and is selected from nonionic aromatic polyethylene glycol ethers, alkylaryl polyether alcohols and sulfonated purified lignins.

6. The composition of claim 3 wherein the antifoam agent is present in an amount of from 0.1 to 0.5 by weight.

7. The composition of claim 1 wherein the particle size of the aluminum hydroxide gel is from 2 to 5 microns average particle diameter.

8. The composition of claim 7 wherein the ammonium thiocyanate is present in an amount of from 0.06 to 0.72 grams per ml of composition.

9. The composition of claim 1 which is

| Component | Weight % |
| --- | --- |
| Ammonium thiocyanate | 45 |
| Aluminum hydroxide gel (10% Al$_2$O$_3$ assay) | 18 |
| Jaguar® HP-8 (hydroxypropyl guar) | 0.5 |
| Water | 36.5 |
| | 100.0 |

10. Use of the compositions according to each of claims 1 to 9 as defoliants and desiccants.

## Revendications

1. Composition défoliante et desséchante fluide comprenant du thiocyanate d'ammonium et 5 à 30% en poids de gel d'hydroxyde d'aluminium.

2. Composition selon la revendication 1, dans laquelle un agent mouillant et dispersant est également présent.

3. Composition selon la revendication 1, dans laquelle un agent antimousse est présent.

4. Composition selon la revendication 2, dans laquelle est également présent un agent de congélation-décongélation à raison de 1 à 10% en poids choisi parmi l'urée, le glycérol, le sorbitol, le mannitol, l'éthylèneglycol, le propylèneglycol, le polyéthylèneglycol, le glucose, le saccharose, le dextrane et la polyvinylpyrrolidone.

5. Composition selon la revendication 2, dans laquelle l'agent mouillant et dispersant est présent à raison de 1 à 6% en poids et est choisi parmi les polyéthylène-glycol-éthers aromatiqeus, les polyétheralcools alkyl-aryliques et les lignines purifiées sulfonées.

6. Composition selon la revendication 3, lands laquelle l'agent antimousse est présent à raison de 0,1 à 0,5% en poids.

7. Composition selon la revendication 1, dans laquelle le gel d'hydroxyde d'aluminium est en particules ayant un diamètre moyen de 2 à 5 μm.

8. Composition selon la revendication 7, dans laquelle le thiocyanate d'ammonium est présent à raison de 0,06 à 0,72 g/ml de composition.

9. Composition selon la revendication 1 ayant la formule suivante:

| composants | % en poids |
| --- | --- |
| Thiocyanate d'ammonium | 45 |
| Gel d'hydroxyde d'aluminium (titrant 10% d'Al$_2$O$_3$) | 18 |
| Jaguar$^{(R)}$ HP-8 (hydroxy-propylguar) | 0,5 |
| Eau | 36,5 |
| | 100,0 |

10. Emploi des compositions selon l'une quelconque des revendications 1 à 9, comme défoliants et desséchants.

## Patentansprüche

1. Fließfähiges Entblätterungsmittel und Austrocknungsmittel, enthaltend Ammoniumthiocyanat und 5 bis 30 Gewichtsprozent Aluminiumhydroxid-Gel.

2. Mittel nach Anspruch 1, gekennzeichnet durch einen zusätzlichen Gehalt an einem Netzmittel und einem Dispergiermittel.

3. Mittel nach Anspruch 1, gekennzeichnet durch einem zusätzlichen Gehalt an einem Antischaummittel.

4. Mittel nach Anspruch 2, gekennzeichnet durch einem zusätzlichen Gehalt an einem Gefrier-Auftaumittel in einer Menge von 1 bis 10 Gewichtsprozent aus der Gruppe Harnstoff, Glycerin, Sorbit, Mannit, Äthylenglykol, Propylenglykol, Polyäthylenglykol, Glucose, Sucrose, Dextran und Polyvinylpyrrolidon.

5. Mittel nach Anspruch 2, dadurch gekennzeichnet, daß das Netzmittel und Dispergiermittel in einer Menge von 1 bis 6 Gewichtsprozent vorliegt und ausgewählt ist aus der Gruppe der nichtionogenen aromatischen Polyäthylenglykoläther, Alkylarylpolyätheralkohole und sulfonierten gereinigten Lignine.

6. Mittel nach Anspruch 3, dadurch gekennzeichnet, daß das Antischaummittel in einer Menge von 0,1 bis 0,5 Gewichtsprozent vorliegt.

7. Mittel nach Anspruch 1, dadurch gekennzeichnet, daß die Teilchengröße des Aluminiumhydroxid-Gels 2 bis Mikron durchschnittlicher Teilchendurchmesser beträgt.

8. Mittel nach Anspruch 7, dadurch gekennzeichnet, daß das Ammoniumthiocyanat in einer Menge von 0,06 bis 0,72 g/ml des Mittels vorliegt.

9. Mittel nach Anspruch 1, gekennzeichnet durch einen Gehalt an folgenden Bestandteilen:

| Komponente | Gewichtsprozent |
|---|---|
| Ammoniumthiocyanat | 45 |
| Aluminiumhydroxid-Gel (10% Al$_2$O$_3$ Gehalt) | 18 |
| Jaguar® HP-8 (Hydroxypropylguar) | 0,5 |
| Wasser | 36,5 |
| | 100,0 |

10. Verwendung der Mittel nach einem der Ansprüche 1 bis 9 als Entblätterungsmittel und Austrocknungsmittel.